# EUROPÄISCHE PATENTANMELDUNG

(11) **EP 1 209 030 A2**
(43) Veröffentlichungstag der Anmeldung: **29.05.2002**
(21) Anmeldenummer: 01121514.2
(22) Anmeldetag: 08.09.2001
(51) Int. Cl.: B60R 1/06, B60R 1/07

(54) **Verstellvorrichtung für Kraftfahrzeug-Aussenspiegel**

(30) Priorität: 25.11.2000 DE 10058730
(71) Anmelder: Bühler Motor GmbH, 90459 Nürnberg (DE)
(72) Erfinder: Guttenberger, Richard, 91171 Greding (DE); Seichter, Werner, 91166 Georgensgmünd (DE)

(57) **Zusammenfassung**

Verstellvorrichtung für den Außenspiegel eines Kraftfahrzeugs mit einem Antriebsgehäuse, an dem ein über ein zentrales Kugel- Kalottenlager (4,5) gelagerter Spiegelglasträger ist, der mit sich kreuzenden Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer elektrischen Kontaktierungseinrichtung für das Spiegelglas zum Zuführen elektrischer Energie für die Spiegelheizung, die Spiegelabdunkelung oder dergleichen, wobei die Kontaktanschlussleitungen (16,17) durch die Mittelachse des Kugel- Kalottenlagers (4,5) geführt sind.

## Beschreibung

Die Erfindung bezieht sich auf eine Verstellvorrichtung für den Außenspiegel eines Kraftfahrzeugs mit einem Antriebsgehäuse an dem über ein zentrales Kugel- Kalottenlager ein Spiegelglasträger gelagert ist, der mit sich kreuzenden Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen und mit einer elektrischen Kontaktierungseinrichtung für das Spiegelglas zum Zuführen elektrischer Energie für die Spiegelheizung, die Spiegelabdunkelung oder dergleichen.

Üblicherweise ist bei derartigen, auch als Glasantriebe bezeichneten Verstellvorrichungen die Ausbildung so getroffen, dass die Kontakte der Spiegelgläser für die Heizung oder dergleichen von außen kontaktiert werden. Dies bedeutet, dass spezielle Leitungen von außen zugeführt werden müssen, die nicht nur den Aufbau und die Montage erschweren, sondern die auch die Schwenkverstellung des Spiegelglases mit dem Spiegelglasträger behindern.

Der Erfindung liegt daher die Aufgabe zugrunde, eine Verstellvorrichtung der eingangs genannten Art so auszugestalten, dass sowohl von der Fertigung als auch der Montage her eine einfachere Kontaktierung des Spiegelglases ohne störende Außenleitungen möglich ist.

Zur Lösung dieser Aufgabe ist erfindungsgemäß vorgesehen, dass die Kontaktierungsleitungen durch die Mittelachse des Kugel- Kalottenlagers geführt sind.

Die Erfindung nutzt dabei die Besonderheit der Antriebsübertragung über die sich kreuzenden Zahnbänder, Ketten oder dergleichen, die ja gleichzeitig dafür sorgen, dass die Gelenkkugel des Spiegelglasträgers in der Gelenkkalotte des Antriebsgehäuses gehaltert wird und nicht einfach heraus fällt, wodurch die üblichen in der Achse des Kugel- Kalottenlagers vorgesehenen Schraubverbindungen oder Schnappverbindungen entbehrlich sind. Durch den Wegfall dieser Schraubverbindung, mithilfe deren der Spiegelglasträger und das Antriebsgehäuse bisher zusammengehalten wurden, gibt sich die Möglichkeit, Durchbrüche in der Gelenkkugel und der Gelenkkalotte vorzusehen, durch welche die Kontaktanschlussleitungen geführt werden können.

In Weiterbildung der Erfindung hat es sich dabei als besonders zweckmäßig erwiesen, wenn am Antriebsgehäuse ein, vorzugsweise vor den fluchtenden Durchbrüchen der Gelenkkugel und der Gelenkkalotte endendes Rohr angeformt ist, in dem die Kontaktanschlussleitungen geführt sind, die wiederum mit einem seitlichen Steckerteil am Anschlussgehäuse verbunden sind. Das zur Führung dienende Rohr verhindert, dass die Anschlussleitungen in Kontakt mit beweglichen Teilen der Antriebsvorrichtungen gelangen können und stützt darüber hinaus die Kontaktanschlussleitungen, die bevorzugt mit an Gegenkontakten am Spiegelglas anliegenden Federkontaktzungen versehen sind. Durch die Abstützung im Rohr ist diese besondere federnde Kontaktierung besonders einfach realisierbar.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

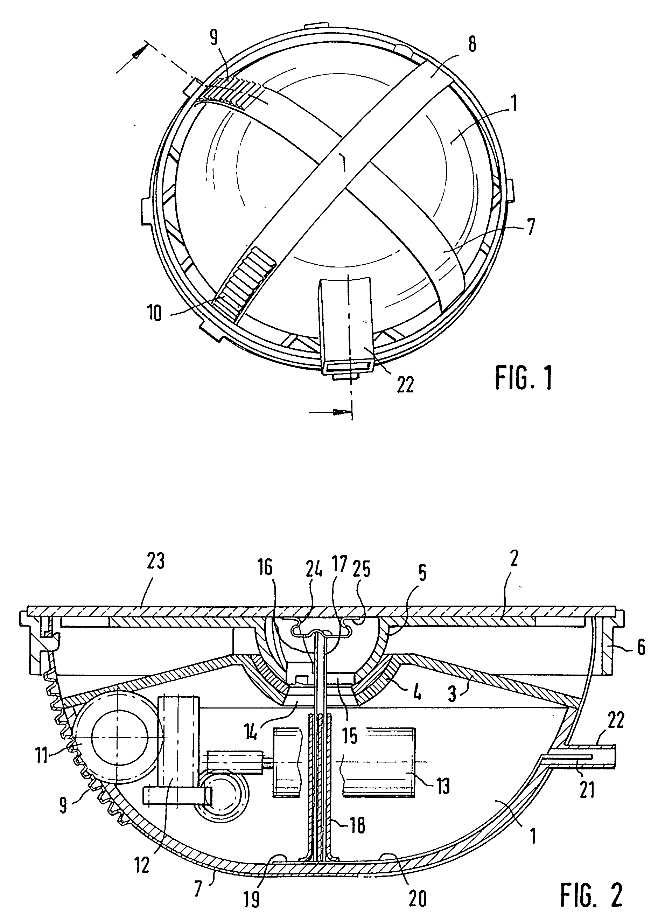

- Fig. 1: Eine perspektivische Ansicht der erfindungsgemäßen Verstellvorrichtung von rückwärts und
- Fig. 2: einen abgewinkelten Schnitt längs der Linie II - II in Fig. 1.

In den Figuren erkennt man, das Antriebsgehäuse 1, in dessen dem Spiegelglasträger 2 zugekehrten Vorderwand 3 eine Gelenkkalotte 4 eingeformt ist, in welche eine Gelenkkugel 5 eingreift, die am Spiegelglasträger 2 angeformt ist. Der mit einer umlaufenden Ringwand 6 versehene Spiegelglasträger 2 ist in gezeigtem Ausführungsbeispiel mit zwei sich kreuzenden elastischen Metallbändern 7 und 8 versehen, die zumindest teilweise als Zahnbänder 9 und 10 ausgebildet sind. In diese Zahnbänder 9 und 10 greifen die Abtriebszahnräder 11 der im Einzelnen nicht dargestellten im Inneren des Antriebsgehäuses 1 angeordneten elektrischen Antriebsvorrichtungen 12 und 13 ein, mithilfe deren der Spiegelglasträger 2 gegenüber dem Antriebsgehäuse 1 und zwei sich rechtwinklig kreuzende Achsen verschwenkbar ist. Die Gelenkkalotte 4, mit der darin befindlichen Gelenkschale und die Gelenkkugel 5 sind mit relativ großen Durchbrüchen 14 und 15 versehen, durch welche die Kontaktanschlussleitungen 16 und 17 für die Spiegelheizung, die Spiegelabdunkelung oder dergleichen, geführt sind. Diese Kontaktanschlussleitungen 16 und 17 sind durch ein in der Achse des Antriebsgehäuses 1 angeordnetes Rohr 18 geführt, das sie stützt und vor einem Kontakt mit bewegten Teilen der Antriebseinrichtungen schützt. Über auf der Innenseite des Antriebsgehäuses angeordnete Kontaktzungen 19 und 20 sind die Kontaktanschlussleitungen 16 und 17 mit den Kontakten 21 eines seitlich am Antriebsgehäuse angeformten Steckerteils 22 verbunden beziehungsweise "einstückig" ausgeführt. Die Kontaktierung der in der Zeichnung nicht dargestellten Gegenkontakte am Spiegelglas 23 kann durch mit den Kontaktanschlussleitungen 16 und 17 verbundene Federkontaktzungen 24 und 25 erfolgen.

Die Größe der Durchbrüche - die im vorliegenden Fall ja nur deshalb möglich sind, weil das Zusammenhalten des Antriebsgehäuses 1 und des Spiegelglasträgers 2 über die Zahnbänder 9 und 10 erfolgt - ist so gewählt, dass auch in den extremen Winkelstellungen des Spiegelglasträgers gegenüber dem Antriebsgehäuse ein fluchtender Bereich der beiden Durchbrechungen in der Mitte für die Kontaktanschlussleitungen 16 und 17 bestehen bleibt.

## Patentansprüche

1. Verstellvorrichtung für den Außenspiegel eines Kraftfahrzeugs mit einem Antriebsgehäuse, an dem ein über ein zentrales Kugel- Kalottenlager gelagerter Spiegelglasträger ist, der mit sich kreuzenden Zahnbändern, Ketten oder dergleichen versehen ist, die das schalenartige Antriebsgehäuse umgreifend in Eingriff mit den Abtriebszahnrädern zweier im Antriebsgehäuse angeordneter Antriebsmotoren stehen, und mit einer elektrischen Kontaktierungseinrichtung für das Spiegelglas zum Zuführen elektrischer Energie für die Spiegelheizung, die Spiegelabdunkelung oder dergleichen, **dadurch gekennzeichnet, dass** die Kontaktanschlussleitungen (16, 17) durch die Mittelachse des Kugel-Kalottenlagers (4, 5) geführt sind.

2. Verstellvorrichtung nach Anspruch 1, **dadurch gekennzeichnet, dass** am Antriebsgehäuse (1) ein vorzugsweise vor fluchtenden Durchbrüchen (14, 15) der Gelenk- Kugel (5), mit der Gelenkschale und der Gelenk- Kalotte (4) endendes Rohr (18) angeformt ist, in dem die Kontaktanschlussleitungen (16, 17) geführt sind, die mit einem seitlichen Steckerteil (21, 22) am Antriebsgehäuse (1) verbunden beziehungsweise einstückig (Stanz-Biegeteil) ausgeführt sind.

3. Verstellvorrichtung nach Anspruch 1, **dadurch gekennzeichnet, dass** die Kontaktanschlussleitungen (16, 17) mit an Gegenkontakten am Spiegelglas (23) flexibel, vorzugsweise mit anliegenden Federkontaktzungen (24, 25) versehen sind.
